## Europäisches Patentamt
## European Patent Office
## Office européen des brevets

(11) Numéro de publication : **0 014 606**
**B1**

(12) # FASCICULE DE BREVET EUROPÉEN

(45) Date de publication du fascicule du brevet :
**16.02.83**

(21) Numéro de dépôt : **80400055.2**

(22) Date de dépôt : **15.01.80**

(51) Int. Cl.³ : **G 21 C 13/06**, G 21 C 19/02

(54) **Dispositif de guidage de conduites devant desservir le petit bouchon tournant d'un réacteur nucléaire.**

(30) Priorité : **18.01.79 FR 7901264**

(43) Date de publication de la demande :
**20.08.80 Bulletin 80/17**

(45) Mention de la délivrance du brevet :
**16.02.83 Bulletin 83/07**

(84) Etats contractants désignés :
**BE DE GB IT NL**

(56) Documents cités :
**AU A 483 164**
**BE A 670 995**
**DE B 1 173 761**
**FR A 1 331 946**
**FR A 1 433 807**
**FR A 1 584 760**
**FR A 2 098 239**
**US A 3 236 738**

(73) Titulaire : **COMMISSARIAT A L'ENERGIE ATOMIQUE Etablissement de Caractère Scientifique Technique et Industriel**
**B.P. 510**
**F-75752 Paris Cedex 15 (FR)**

(72) Inventeur : **Moulin, Maurice**
**9, rue Théodore de Bauville**
**F-91120 Palaiseau (FR)**

(74) Mandataire : **Mongrédien, André et al**
**c/o Brevatome 25, rue de Ponthieu**
**F-75008 Paris (FR)**

# Dispositif de guidage de conduites devant desservir le petit bouchon tournant d'un réacteur nucléaire

La présente invention a pour objet un dispositif de guidage de conduites devant desservir une pièce mobile en rotation.

On sait que dans certains réacteurs nucléaires du type à neutrons rapides, refroidis par un métal liquide, la cuve du réacteur contenant le cœur de celui-ci, le métal liquide de refroidissement (qui est en général du sodium) ainsi que, dans la version intégrée, les pompes primaires et les échangeurs primaires, est fermée à sa partie supérieure par une dalle en béton. Pour les opérations de chargement et de déchargement des assemblages combustibles constituant le cœur, la dalle comporte en fait un grand bouchon tournant dont l'axe est confondu avec l'axe de la cuve et l'axe du cœur et un petit bouchon tournant mobile en rotation par rapport au grand bouchon tournant autour d'un axe excentré par rapport à celui du grand bouchon tournant. De plus, une structure dite « couvercle de cœur » est suspendue en-dessous du petit bouchon tournant au voisinage immédiat de la face supérieure du cœur.

Par ailleurs, on sait que pour contrôler le bon fonctionnement du réacteur nucléaire à neutrons rapides, un très grand nombre d'appareils de mesure ou de contrôle est disposé dans le couvercle du cœur. Ces appareils sont constitués par des capteurs de température, de pression, des appareils de mesure du flux neutronique, des appareils liés à la détection et à la localisation de ruptures de gaines, etc. Bien entendu, l'ensemble de ces capteurs et appareils est relié à des conducteurs électriques pour l'alimentation de ceux-ci et pour la transmission des informations qu'ils relèvent. En outre, des tubes pour l'alimentation de ces différents appareils en divers liquides ou fluides doivent également être prévus. En d'autres termes, un grand nombre de ces câbles conducteurs gainés ou tubes doivent desservir le petit bouchon tournant. C'est ce sens qu'il faut donner au terme de « conduite » utilisé dans la description et dans les revendications du présent texte qui regroupe les câbles et les tubes.

Bien sûr le problème est de guider ces tubes entre le petit bouchon tournant et les appareils d'enregistrement ou d'alimentation qui sont disposés à l'extérieur de la cuve, mais qui sont donc solidaires de la partie fixe de la dalle. En d'autres termes, le problème à résoudre est celui du guidage de ces câbles et tubes qui partent d'un point fixe et qui doivent arriver en un point du petit bouchon tournant, celui-ci étant mobile par rapport au bouchon tournant, ce dernier étant lui-même mobile en rotation par rapport à la dalle. Ce problème est bien sûr rendu encore plus complexe du fait du très grand nombre de conduites (tubes ou conducteurs électriques) qui sont en jeu et qui donnent à l'ensemble une raideur non négligeable. Bien entendu, il s'agit de guider ces conduites de telle façon qu'elles puissent subir sans dommage le très grand nombre

de manœuvres du petit et du grand bouchons tournants lors des opérations de rechargement.

Dans les techniques antérieures, l'alimentation électrique et en fluide des dispositifs solidaires du petit bouchon tournant se faisait en utilisant une liaison souple par câbles. On utilisait des systèmes à goulottes circulaires situés au-dessus des bouchons tournants et ayant à peu près le même diamètre que ceux-ci. Les câbles ou tubes, d'abord reliés à une jonction fixe de la goulotte font une grande boucle à l'intérieur de celle-ci et en sortent à travers une jonction mobile ou une jonction fixe liée à une partie mobile de la goulotte. Les câbles descendent verticalement vers des prises solidaires du petit bouchon tournant. La boucle donne le mou nécessaire pour que la jonction mobile puisse suivre la combinaison des débattements du petit et du grand bouchons tournants, en maintenant ainsi verticale la partie descendante des câbles ou tubes d'alimentation.

Cette solution présente l'inconvénient d'être très encombrante, d'occuper un volume important au-dessus des bouchons, ce qui est un inconvénient grave du fait que le petit et le grand bouchons tournants sont déjà très encombrés par une multiplicité de dispositifs liés au fonctionnement du réacteur nucléaire, et de rendre très difficile le remplacement d'une conduite.

Cependant, la présente invention n'est nullement liée à un réacteur nucléaire comportant deux bouchons tournants excentrés. elle s'applique de façon générale à la traversée par un faisceau de câbles d'une pièce tournante, l'autre extrémité des câbles étant fixée par rapport à la pièce tournante.

Pour illustrer de façon plus large l'état de la technique, on pourra également citer à titre d'exemples les brevets USA-3 236 738, FR-A-1 433 807, FR-A-1 584 800 et BE-A-670 995.

La présente invention a dans son application au cas des réacteurs nucléaires à neutrons rapides pour objet un dispositif de guidage de ces câbles et tubes devant desservir le petit bouchon tournant qui permet de dégager presque totalement le volume situé au-dessus du petit et du grand bouchons tournants. L'invention concerne dans tous ses modes de réalisation un dispositif qui permet d'assurer des dizaines de milliers de rotations en hélices des câbles et tubes sans produire de rupture pour des angles de rotation de la pièce tournante de plus ou moins 220° par rapport à la position de repos.

Pour obtenir ce résultat, l'invention consiste en un dispositif de guidage de conduites devant traverser une pièce mobile en rotation autour d'un axe vertical, ledit dispositif se caractérisant en ce qu'il comprend des moyens de supportage pour supporter lesdites conduites entre un point fixe extérieur à ladite pièce et un deuxième point situé sur la verticale passant par l'axe de rotation de ladite pièce mobile constituant l'extrémité des moyens de supportage, des moyens de guidage des portions de conduites disposées entre l'extrémité desdits moyens de supportage et le centre de rotation de ladite pièce mobile, lesdits moyens de guidage étant aptes à maintenir régulièrement espacées lesdites portions de conduites sur une surface de révolution autour de l'axe de ladite pièce mobile, lesdites portions de conduites formant ainsi un toron, et des moyens pour rendre solidaire l'extrémité inférieure desdits moyens de guidage de ladite pièce mobile en son centre de rotation.

Comme on l'a indiqué, l'invention s'applique en particulier au cas des réacteurs nucléaires du type à double bouchon tournant. La pièce fixe est alors le petit bouchon tournant.

De préférence, les moyens de supportage des câbles ou conduites consistent en deux bras horizontaux articulés.

Dans un premier mode de réalisation, le dispositif se caractérise en ce qu'il comprend une potence solidaire dudit petit bouchon comportant un fût vertical et un bras hozirontal, l'extrémité libre dudit bras de potence étant située sur l'axe dudit petit bouchon tournant, un premier bras de guidage horizontal articulé à l'une de ses extrémités par rapport à un point fixe du réacteur, un deuxième bras de guidage horizontal dont une extrémité est articulée à l'extrémité libre dudit premier bras de guidage, des moyens pour commander le pivotement du premier bras par rapport au point fixe et le pivotement des deux bras de guidage entre eux de telle façon que l'extrémité libre dudit deuxième bras de guidage soit assujettie à rester sur l'axe dudit petit bouchon tournant, lesdites conduites étant fixées le long desdits deux bras de guidage et le long du bras horizontal de la potence, et des moyens de guidage des portions desdites conduites disposées entre ledit bras de potence et ledit deuxième bras de guidage aptes à maintenir régulièrement espacées lesdites portions de conduites sur une surface de révolution autour de l'axe dudit petit bouchon tournant, lesdites portions de conduites formant ainsi un toron.

De préférence, lesdits moyens de guidage consistent en une pluralité de plateaux circulaires dont un plateau inférieur solidaire de l'extrémité du bras de potence, un plateau supérieur solidaire en rotation de l'extrémité libre du deuxième bras de guidage, mais libre en translation verticale par rapport à celui-ci, et au moins un plateau intermédiaire, lesdites portions de conduites étant fixées à intervalles réguliers sur la périphérie desdits plateaux et des moyens pour maintenir lesdits plateaux horizontaux et centrés sur l'axe dudit petit bouchon tournant et des moyens pour répartir régulièrement entre les plateaux l'angle de rotation du plateau supérieur par rapport au plateau inférieur lors du pivotement des bras de guidage et des bouchons tournants en fonction des distances verticales séparant lesdits plateaux, un mou étant laissé aux conduites entre le plateau supérieur et le deuxième bras de guidage.

Selon une autre caractéristique, ledit plateau supérieur est rendu solidaire de l'extrémité du deuxième bras de guidage par un organe à longueur variable exerçant une force constante dirigée selon l'axe dudit petit bouchon tournant, et assurant une solidarisation en rotation.

De préférence, ledit organe est un vérin dont la tige disposée selon l'axe dudit petit bouchon tournant est solidaire dudit plateau supérieur et dont le corps est solidaire de l'extrémité dudit deuxième bras de guidage.

Selon une autre caractéristique préférée, lesdits plateaux sont reliés entre eux par une pluralité de câbles de même longueur, chaque câble étant fixé à son extrémité supérieure sur le plateau supérieur et à son extrémité inférieure sur ledit plateau inférieur, lesdits câbles traversant le ou lesdits plateaux intermédiaires et étant fixés sur ceux-ci.

Selon un mode perfectionné de réalisation, ladite potence est elle-même mobile en rotation autour de l'axe vertical de son fût, sous l'effet d'un organe moteur.

Dans ce cas, le dispositif est caractérisé en ce que ledit fût est fixe et en ce que ledit bras de potence est monté pivotant à l'extrémité supérieure dudit fût, les portions de conduites s'étendant le long dudit fût étant fixées à la périphérie des deuxièmes plateaux circulaires semblables aux premiers plateaux, ledit deuxième plateau supérieur étant rendu solidaire dudit bras par des organes élastiques produisant une force selon la direction verticale, du mou étant laissé aux conduites entre ledit deuxième plateau supérieur et ledit bras de potence.

Selon une première variante de réalisation, on supprime la potence, c'est-à-dire que le plateau inférieur est directement fixé sur le petit bouchon tournant, le centre du plateau correspondant avec l'axe de rotation du petit bouchon.

Selon une deuxième variante de réalisation, les moyens de guidage consistent en un mât vertical de guidage solidaire à son extrémité inférieure du centre du petit bouchon tournant et à son extrémité supérieure de l'extrémité libre des moyens de supportage ; un plateau supérieur horizontal solidaire en rotation de l'extrémité libre desdits moyens de supportage, mais libre en translation verticale et entourant ledit mât ; un plateau inférieur horizontal entourant ledit mât et solidaire de l'extrémité inférieure dudit mât ; et au moins un plateau intermédiaire entourant ledit mât, libre en translation selon la direction dudit mât et partiellement libre en rotation autour dudit mât, chaque plateau comportant sur sa périphérie des moyens régulièrement répartis pour fixer des câbles maintenant lesdits plateaux horizontaux, le ou chaque plateau intermédiaire comportant des moyens pour limiter la rotation autour du mât de telle façon que l'angle de rotation entre le plateau supérieur et le plateau inférieur soit régulièrement réparti entre le ou les plateaux intermédiaires.

De toute façon, l'invention sera mieux comprise à la lecture de la description qui suit de plusieurs modes de réalisation de l'invention, donnés à titre d'exemples non limitatifs. La description se réfère aux figures annexées sur lesquelles, on a représenté :

sur la figure 1, une vue en coupe verticale d'un réacteur nucléaire à neutrons rapides comportant le dispositif de guidage des conduites selon le premier mode de réalisation de l'invention ;

sur la figure 2, une vue en perspective de l'ensemble du dispositif de guidage des tubes et câbles au-dessus des deux bouchons tournants ;

sur la figure 3, une vue de dessus simplifiée de l'ensemble du dispositif montrant les moteurs d'actionnement des bras de guidage du dispositif ;

sur la figure 4, une vue en perspective d'un plateau de la partie verticale du dispositif selon le premier mode de réalisation ;

sur la figure 5, une vue en coupe et en élévation de l'extrémité supérieure de la partie verticale du dispositif selon le premier mode de réalisation ;

sur la figure 6, une vue en coupe verticale montrant la potence d'une variante de réalisation selon laquelle la potence est mobile par rapport au petit bouchon tournant ;

sur les figures 7a et 7b des vues en perspective et en coupe verticale d'un premier mode de réalisation d'un plateau intermédiaire selon la deuxième variante de réalisation ;

sur la figure 8, une vue en perspective d'un deuxième mode simplifié de réalisation d'un plateau intermédiaire selon la deuxième variante de réalisation ; et

sur la figure 9, une vue partielle en coupe verticale de la partie supérieure du mât montrant la liaison entre le plateau supérieur et le mât.

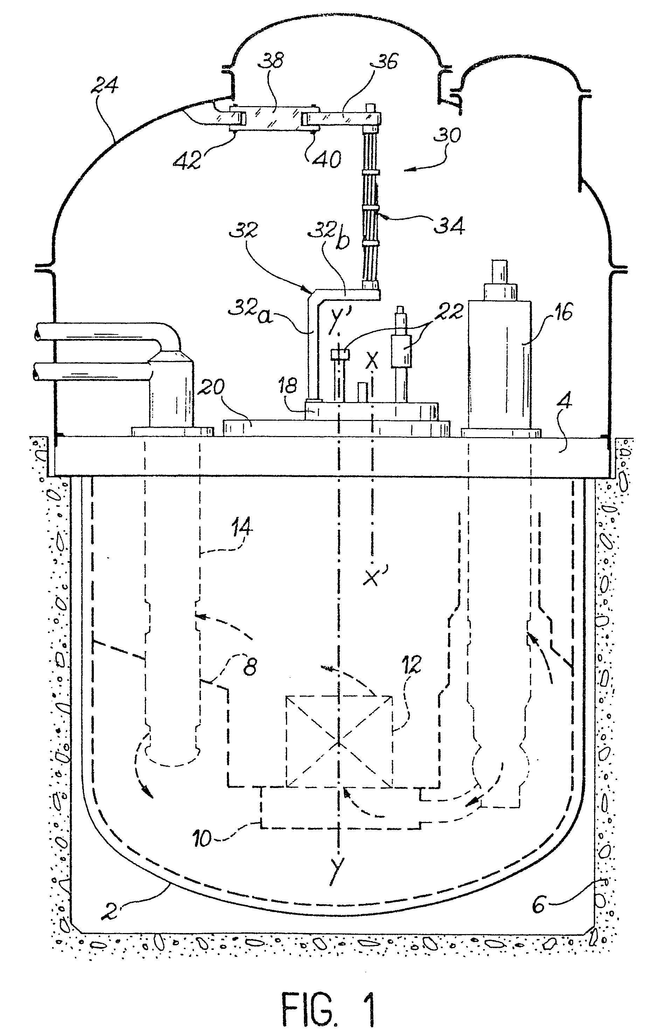

Sur la figure 1, on a représenté la cuve principale du réacteur nucléaire à neutrons rapides du type intégré 2, suspendue à la dalle supérieure 4, elle-même supportée par le massif bétonné 6. A l'intérieur de la cuve principale 2, on trouve la cuve primaire 8 et le sommier 10 supportant le cœur 12 du réacteur nucléaire et servant à l'alimentation en métal liquide du cœur. Comme dans l'exemple considéré, on se réfère à un réacteur du type intégré, on a également représenté un échangeur primaire 14 suspendu à la dalle 4 et une pompe primaire 16 également suspendue à cette dalle. Dans la dalle supérieure 4, on trouve le petit bouchon tournant 18 mobile en rotation autour de l'axe XX', ce petit bouchon tournant 18 étant lui-même monté dans le grand bouchon tournant 20 mobile en rotation autour de son axe YY' qui coïncide avec l'axe de la cuve principale 2. On comprend qu'ainsi tout point lié au petit bouchon tournant 18 est animé par rapport à la dalle fixe 4 d'un mouvement planétaire par combinaison des mouvements de rotation du petit bouchon tournant 18 et du grand bouchon tournant 20. On a également représenté de façon symbolique, sur le petit bouchon tournant 18, divers organes 22 tels que le grappin de manutention et diverses autres installations. On a également représenté l'enceinte de confinement 24 qui entoure l'espace au-dessus de la dalle supérieure 4.

L'ensemble de la description précédente peut se rapporter à n'importe quel réacteur nucléaire à neutrons rapides du type intégré et par exemple au réacteur nucléaire français SUPERPHENIX.

Sur cette figure générale, on a également représenté très schématiquement le dispositif 30 de guidage des tubes et câbles qui doivent traverser le petit bouchon tournant pour venir sur le couvercle de cœur selon un premier mode de réalisation. Ce mécanisme 30 comprend une potence 32 comportant une partie verticale ou fût 32a et une partie horizontale ou bras 32b, cette potence 32 étant fixée sur la périphérie du petit bouchon tournant. La potence 32 est réalisée de telle façon que l'extrémité du bras horizontal 32b de la potence 32 soit disposée sur l'axe XX' de rotation du petit bouchon tournant 18. A l'extrémité de la partie horizontale 32b de la potence 32, s'élève une partie médiane verticale formant un toron à plateau 34 qui est disposé de telle manière que son axe vertical coïncide avec l'axe de rotation XX' du petit bouchon tournant. Le dispositif 30 comporte également, disposés sensiblement dans un même plan horizontal, un premier bras de levier 36 articulé à l'extrémité supérieure du toron 34 et un deuxième bras de levier 38 articulé autour d'une articulation à axe vertical 40 par rapport au premier bras 36 et par rapport à un deuxième axe vertical 42 solidaire de l'enceinte de confinement 24 du réacteur nucléaire.

La longueur de la partie verticale 32a de la potence 32 dégage une hauteur H au-dessus du petit bouchon tournant permettant ainsi l'implantation des divers organes 22. Les câbles et tubes qui doivent traverser le petit bouchon tournant sont fixés respectivement sur les deux bras de guidage 36 et 38, descendent verticalement pour constituer le toron 34 et sont guidés par les deux éléments de la potence 32 jusqu'aux différents points du petit bouchon tournant 18 où ces câbles ou tubes doivent desservir ce dernier.

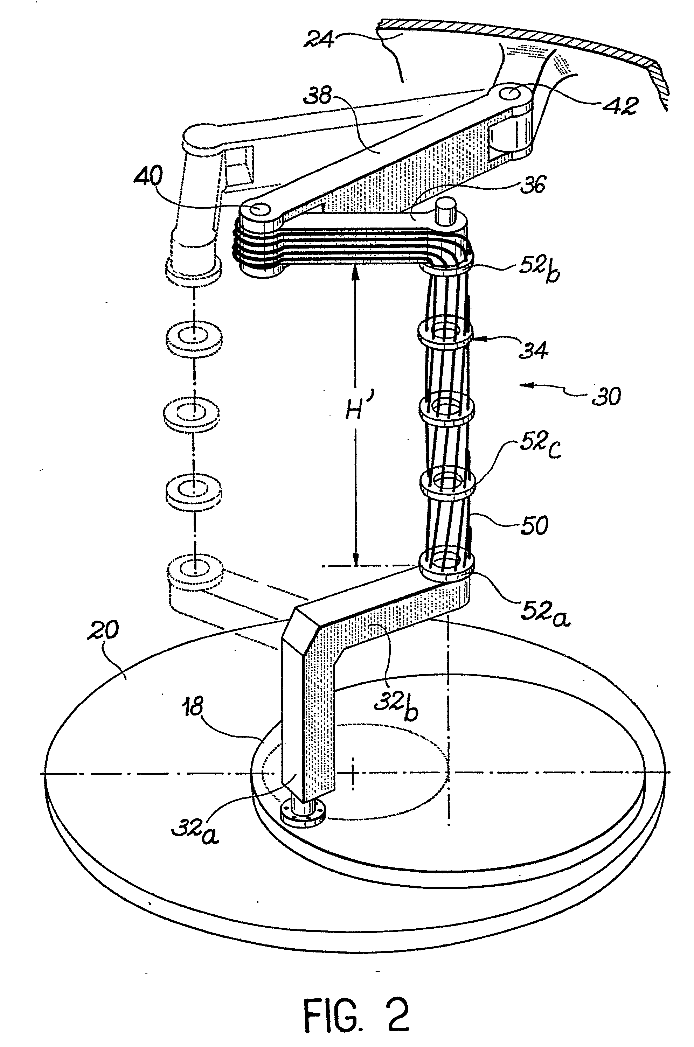

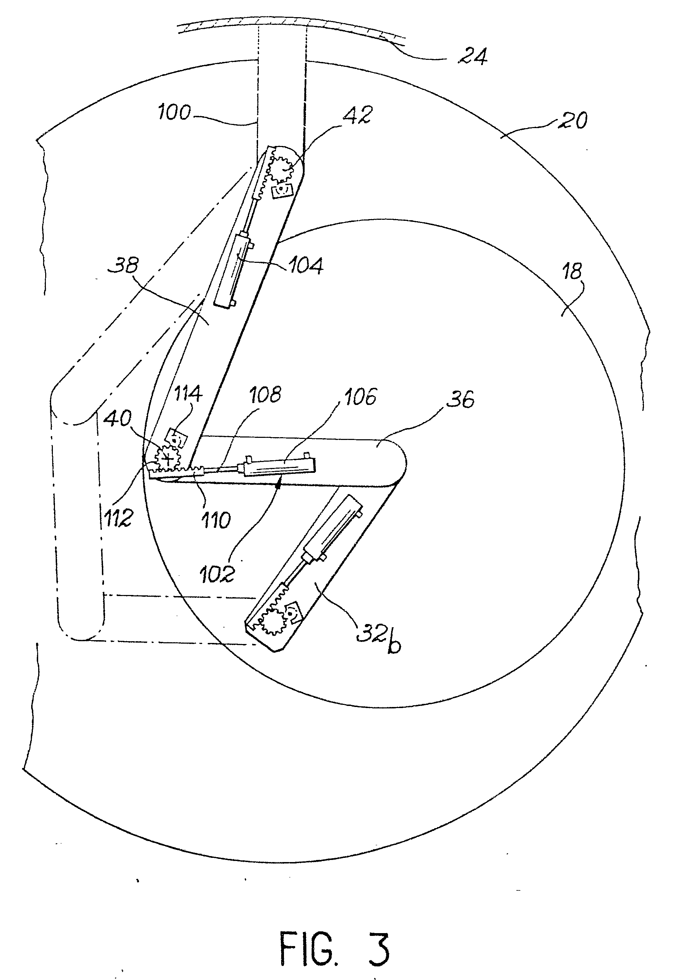

Avant de décrire plus en détail le dispositif de guidage selon le premier mode de réalisation, on peut dès à présent en se référant plus particulièrement aux figures 2 et 3, comprendre l'intérêt et le fonctionnement général du dispositif. Lors des rotations combinées du petit bouchon 18 et du grand bouchon 20, les deux bras de levier 36 et 38 sont assujettis à pivoter autour des axes 40 et 42 de telle façon que l'axe vertical du toron 34 reste en coïncidence avec l'axe de rotation du petit bouchon tournant. On comprend en particulier que grâce à la présence de ces deux bras de levier, quelle que soit la position du petit bouchon tournant par rapport au grand bouchon et plus précisément quelle que soit la position du point où la potence 32 est fixée sur le petit bouchon, l'extrémité du bras de levier 36 peut être maintenue dans le prolongement de l'axe XX' du petit bouchon par pivotement des bras de levier 36 et 38 avec ces angles relatifs de pivotement dont l'amplitude est réduite quelles que soient les rotations du petit et du grand bouchons tournants par rapport à une position de référence. On comprend que cette limitation des débattements angulaires soit une caractéristique particulièrement importante de l'invention puisque des câbles ou des tubes qui présentent une certaine raideur doivent contourner les différentes articulations. Cela permet en particulier, comme on l'expliquera ultérieurement, de limiter les longueurs mortes de câbles et tubes, tout en limitant le taux de contrainte dans les tubes ou câbles sous l'effet de la torsion produite par la rotation des petit et grand bouchons tournants.

On comprend bien que l'un des problèmes à résoudre est le vrillage des câbles ou tubes dans la portion de guidage vertical correspondant au toron 34. Plus précisément, le problème est de contrôler ce vrillage pour éviter l'introduction dans ces tubes ou câbles de contraintes localisées excessives susceptibles par leur caractère répétitif d'entraîner leur détérioration.

On va maintenant décrire plus en détail la réalisation de cette partie du dispositif pour mieux en faire ressortir l'originalité.

Pour leur guidage, selon la direction verticale dans le toron 34, les différents câbles ou tubes 50 sont fixés sur des plateaux annulaires tels que 52 espacés régulièrement entre la partie horizontale 32b de la potence 32 et le bras 36. En fait, il faut distinguer un plateau inférieur 52a qui est solidaire du bras 32b de la potence 32, un plateau 52b supérieur qui est associé au bras 36 et des plateaux intermédiaires 52c. Les câbles ou tubes 50, du moins dans la partie concernée par le toron 34, sont fixés sur les plateaux 52 étant régulièrement espacés et constituant ainsi l'équivalent d'une cage d'écureuil. Comme on le verra ultérieurement les différents plateaux sont positionnés les uns par rapport aux autres par trois câbles solidaires de l'anneau inférieur 52a et de l'anneau supérieur 52b. En outre, on comprend que lors de la rotation des bras supérieurs 36 et 38, on produit une torsion des câbles 50. Cette torsion dans un sens ou dans l'autre s'accompagne bien sûr d'une diminution de la hauteur verticale H' qui sépare le plateau inférieur 52a solidaire du bras 32b du plateau supérieur 52b par rapport à une valeur médiane. Pour cela, comme on le verra en détail ultérieurement, le plateau 52b n'est pas directement solidaire du bras 36, mais est relié à celui-ci par l'intermédiaire d'un vérin vertical qui autorise des déplacements des plateaux supérieurs 52b pour absorber les diminutions ou les augmentations de cette hauteur H' par rapport à une valeur médiane.

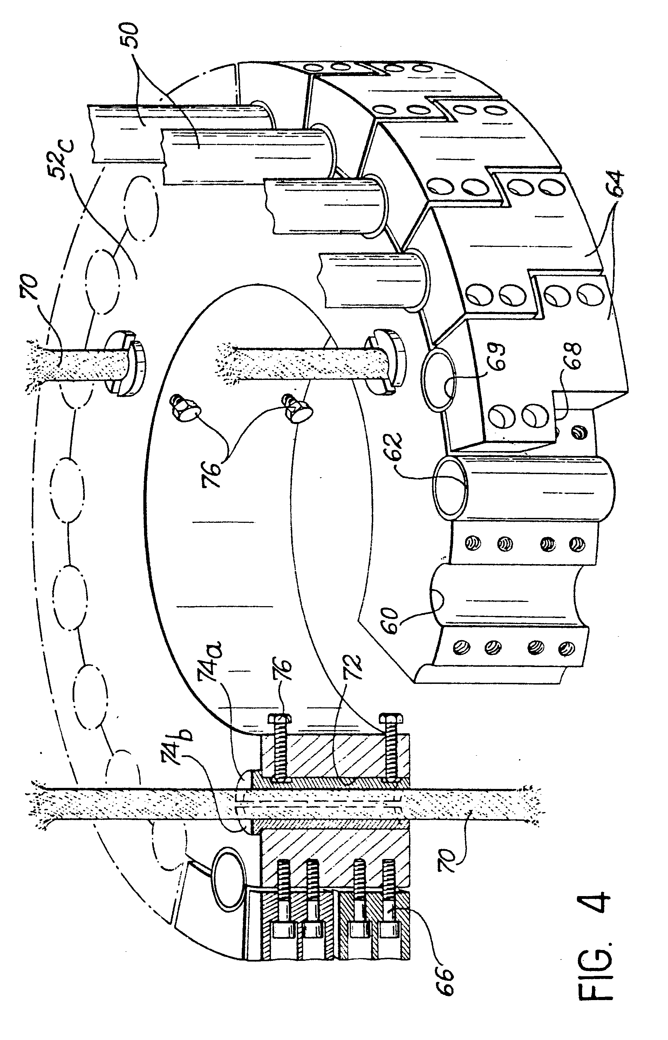

Sur la figure 4, on a représenté plus en détail un exemple de réalisation d'un plateau intermédiaire 52c. Celui-ci se présente sous la forme d'une couronne dont la face externe est munie d'encoches semi-cylindriques 60. Les câbles tels que 50 sont placés au niveau du plateau dans un manchon circulaire 62. Ce manchon 62 étant placé à son tour dans une encoche 60 et serré grâce à une pièce de serrage individuelle telle que 64. Cette pièce de serrage 64 est fixée dans le plateau 52 par quatre vis telles que 66. On comprend que la forme imbriquée 68 de ces pièces de serrage permet de réduire l'espace entre deux câbles 50 consécutifs, tout en assurant une fixation de la pièce de serrage 64 de part et d'autre de la gaine 62. Bien entendu, chaque pièce de serrage comporte un alésage semi-cylindrique 69 qui coopère avec l'alésage 60 du plateau intermédiaire 52c. Le mode de fixation des câbles ou tubes 50 dans les plateaux 52a et 52b se présente bien sûr exactement de la même façon.

En outre et comme on l'a indiqué précédemment, les différents plateaux intermédiaires 52c sont maintenus en place par des câbles 70 de supportage. Ces câbles de supportage sont, par exemple au nombre de trois. Comme on l'expliquera ultérieurement, ces câbles sont fixés sur le plateau supérieur 52a et sur le plateau inférieur 52b et ils sont bien sûr également fixés dans les plateaux intermédiaires 52c. Sur la figure 4, on a représenté également un mode préféré de serrage des câbles 70. Ce serrage est réalisé en plaçant à l'intérieur d'un alésage 72 ménagé dans le plateau 52 deux demi-coquilles hémi-cylindriques 74a et 74b. Le serrage du câble dans le plateau 52 est assuré par exemple à l'aide de deux vis pointeaux 76 venant serrer une des demi-coquilles, 74a, par exemple, par rapport à l'autre demi-coquille. On comprend alors, que les câbles 70 sont rendus solidaires de chacun des plateaux intermédiaires.

Il est important d'insister sur la double fonction remplie par les câbles de supportage 70. La première fonction est de maintenir l'égalité de l'espacement entre deux plateaux consécutifs lors du mouvement relatif du bras 36 par rapport à la potence 32, selon la direction verticale. L'autre fonction est de répartir régulièrement entre les différents plateaux intermédiaires 52c, l'angle dont tourne le plateau supérieur 52b par rapport au plateau inférieur 52a solidaire de la potence. Plus précisément, grâce aux câbles de supportage 70, si le plateau supérieur 52b tourne d'un angle A par rapport au plateau inférieur 52a, l'angle entre deux plateaux consécutifs sera sensiblement égal à $-A/n+1$ s'il y a $n$ plateaux intermédiaires 52c.

Il faut ajouter que cette deuxième fonction pourrait être remplie différemment. Par exemple, on pourrait prévoir pour chaque plateau, deux butées solidaires du plateau immédiatement inférieur limitant la rotation du plateau considéré à un angle maximal, compte tenu de l'angle maximal qui peut apparaître entre les plateaux inférieur 52a et supérieur 52b.

Plus généralement, les plateaux sont reliés entre eux de telle manière que l'angle total de rotation entre le plateau supérieur et le plateau inférieur se répartisse entre les divers plateaux au prorata de la distance qui sépare les plateaux selon la direction verticale et qu'ils conservent un axe commun de symétrie de révolution.

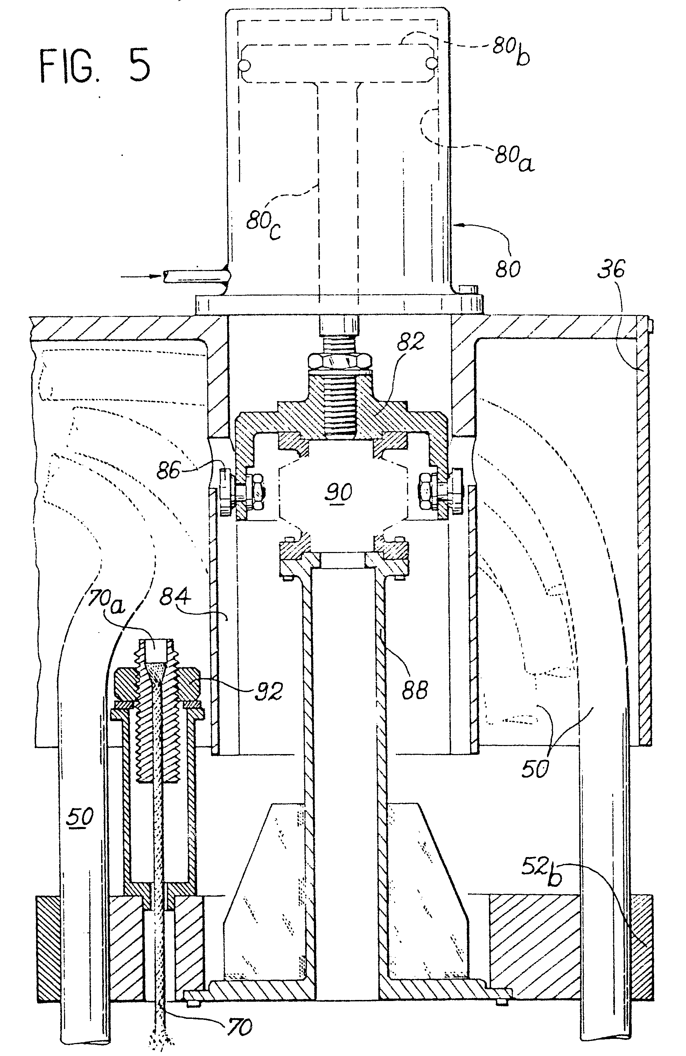

Sur la figure 5, on a représenté l'articulation entre le toron 34 et le bras 36 et plus précisément la façon dont on compense les variations de longueur dues à la torsion des câbles ou tubes 50. Le plateau supérieur 52b n'est pas solidaire du bras 36. Il est relié à celui-ci par l'intermédiaire de la tige d'un vérin portant la référence générale 80.

On a appelé 80a le corps de vérin, 80b son piston et 80c la tige de ce vérin. Cette tige est solidaire d'un étrier 82 guidé en translation verticale par la coopération de glissières 84 et de galets 86 solidaires de l'étrier 82. L'étrier 82 est rendu solidaire d'une tige de transmission 88. Celle-ci est fixée d'une part sur le plateau supérieur 52b et d'autre part, sur l'étrier 82 par l'intermédiaire d'un système 90 formant cardan. On comprend qu'ainsi le plateau supérieur 52b est bien solidaire en rotation du bras 36, mais qu'il peut se déplacer selon une direction verticale par rapport au bras 36. Plus précisément, le vérin 80 est commandé de telle manière qu'il exerce une force constante. Ainsi, sous l'effet de la rotation du plateau supérieur 52b par rapport au plateau inférieur 52a, le déplacement du plateau 52b ne se fait qu'au fur et à mesure de la torsion de l'ensemble des câbles 50. En outre, sur cette figure 5, on a représenté schématiquement l'extrémité supérieure 70a du câble de suspension 70 associé à un système d'écrou 92 qui permet d'effectuer le réglage.

Sur la figure 3, on a représenté schématiquement, en vue de dessus, l'ensemble du dispositif de guidage des câbles ou tubes. On retrouve le bras horizontal 32b de la potence 32, le bras 36 articulé par rapport à cette potence, le bras 38 articulé autour de l'axe 40 par rapport au bras 36, le bras 38 étant lui-même articulé autour de l'axe 42 par rapport à une console 100 solidaire du dôme 24. Les mouvements des bras 36 et 38 pour suivre les mouvements du petit et du grand bouchons tournants sont produits par deux dispositifs moteurs portant la référence 102 pour le mouvement du bras 36 par rapport au bras 38 autour de l'axe 40 et 104 pour le mouvement du bras 38 autour de l'axe 42 par rapport à la console fixe 100.

Selon le mode de réalisation représenté sur la figure 3, chaque moyen moteur 102 et 104 est constitué par un vérin hydraulique 106 solidaire par exemple du bras 36 dont la tige 108 porte une crémaillère 110. Cette crémaillère engrène avec un pignon denté 112 solidaire du bras 38 et admettant comme axe l'axe 40. On comprend aisément qu'en agissant sur la commande du vérin 106, on provoque le pivotement du bras 36 par rapport au bras 38. En outre, le dispositif comporte un détecteur mécanique, par exemple 114 qui détecte les mouvements du bras 36 par rapport au bras 38. Ce détecteur transmet vers l'ensemble de commande un signal représentatif de ce mouvement. Il en est exactement de même pour l'organe moteur 104. dans ce mode de réalisation, on comprend que l'ensemble de commande comporte des dispositifs d'asservissement pour assujettir les organes moteurs 102 et 104 à déplacer l'extrémité du bras 36 de telle façon que son extrémité reste à la verticale de l'axe du petit bouchon tournant. Bien entendu, on pourrait utiliser d'autres moyens moteurs. Ce résultat peut être obtenu facilement selon des techniques d'asservissement bien connues, utilisant par exemple des détecteurs 114 et réalisant l'asservissement entre ces moyens mécaniques 104 et 102 et les moyens mécaniques de déplacement des petit et grand bouchons tournants. Il n'est donc pas nécessaire de décrire ce système d'asservissement plus en détail.

Dans la description précédente, on a considéré que la potence 32 était rigidement fixée sur le petit bouchon tournant, c'est-à-dire qu'il n'existait aucune possibilité de pivotement de la partie verticale 32a par rapport au petit bouchon tournant. Cependant, pour certaines opérations de manutention sur le réacteur nucléaire, il peut être intéressant de dégager au maximum la totalité de l'espace s'étendant au-dessus du petit bouchon tournant. C'est pourquoi, selon une variante perfectionnée de réalisation, on peut prévoir une possibilité de pivotement de la potence autour de son axe vertical ZZ'.

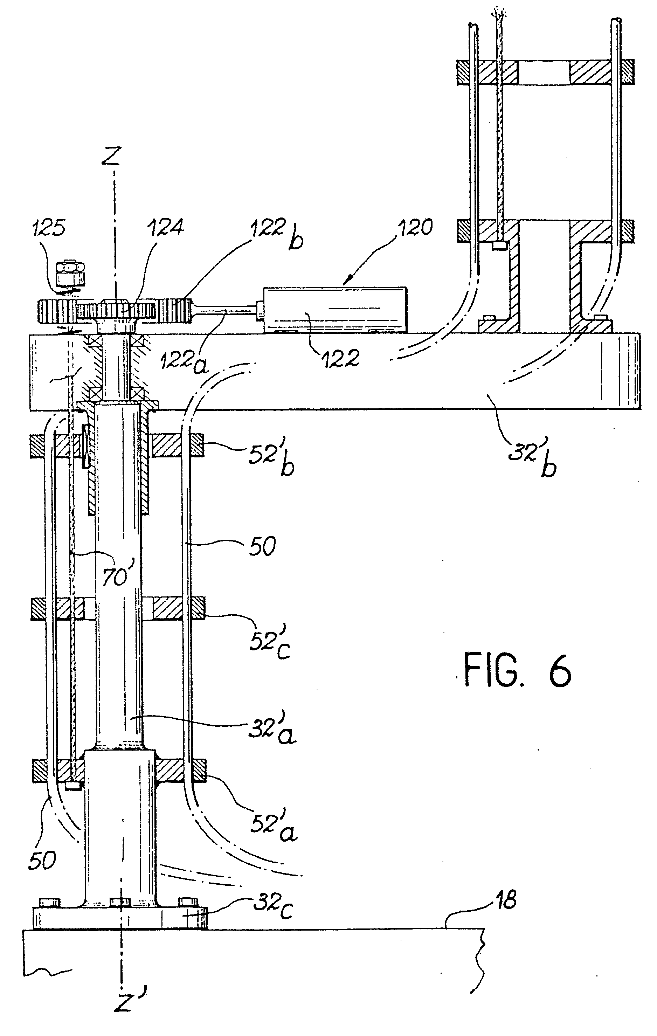

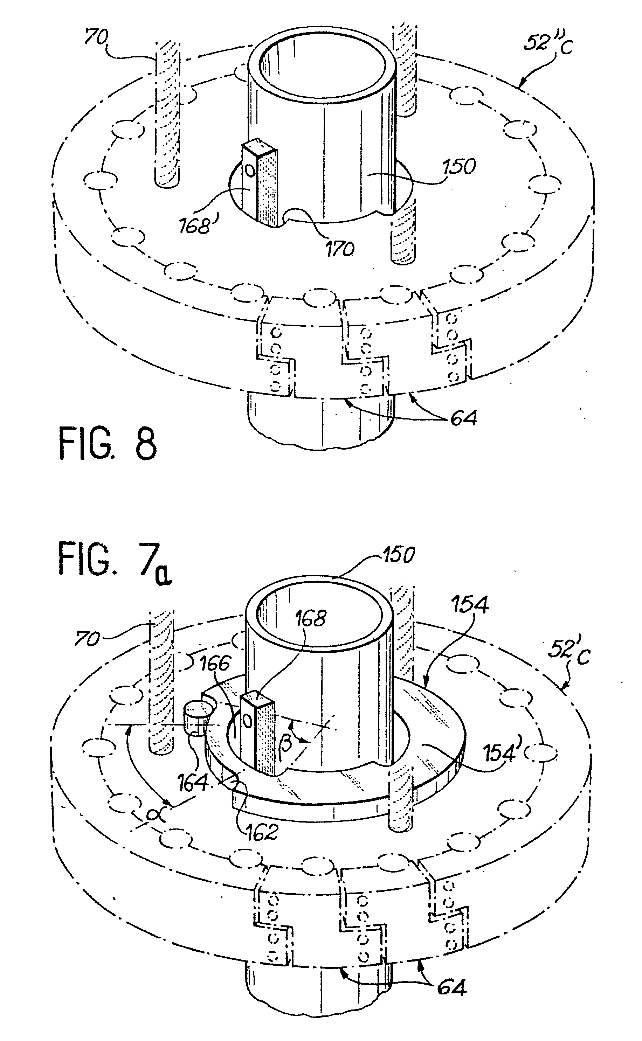

En se référant à la figure 6, on va décrire ce mode de réalisation plus en détail.

Selon ce mode de réalisation, le bras horizontal 32'b est mobile en rotation dans un plan horizontal autour du fût vertical 32'a. On comprend que dans ces conditions, il se pose le même problème de torsion des câbles ou tubes 50 disposés le long de cette portion du dispositif de guidage. Ce problème est résolu sensiblement comme cela est prévu pour le toron 34, en gardant cependant en mémoire le fait que la rotation de la potence est beaucoup moins fréquente que celle du toron 34 et qu'ainsi les efforts appliqués sont également beaucoup moins importants.

Le fût 32'a est muni d'un socle 32c solidaire du petit bouchon tournant 18. Le bras 32'b de la potence est monté pivotant autour de l'extrémité supérieure du fût 32'a de façon connue. Le guidage des câbles ou tubes 50 est assuré par des plateaux semblables aux plateaux 52. On trouve un plateau inférieur 52'a solidaire du socle 32c, un plateau supérieur 52'b solidaire du bras 32'b et un ou plusieurs plateaux intermédiaires 52'c, ce ou ces derniers étant libres en translation et en rotation par rapport au fût 32'a.

Les câbles ou tubes 50 sont régulièrement fixés sur la périphérie des plateaux pour former ainsi l'équivalent d'une cage d'écureuil. Comme dans le cas du toron 34, le ou les plateaux intermédiaires sont reliés au plateau supérieur 52'b par des câbles de supportage 70'. Ces câbles 70' sont fixés sur le plateau supérieur 52'b par l'intermédiaire de dispositifs élastiques 125 qui jouent d'une certaine manière le même rôle que le vérin 80 compte tenu du fait que la fréquence des mouvements est beaucoup plus faible.

Par ailleurs, le fût 32'a traverse le bras horizontal 32'b. Un organe moteur 120 permet de faire tourner le bras 32'b autour du fût 32'a. Il peut être constitué par un vérin 122 dont la tige 122a est solidaire d'une crémaillère 122b qui coopère avec un pignon 124 solidaire de l'extrémité supérieure du fût 32'a.

L'organe moteur est associé à un capteur de rotation du bras 32'b non représenté. Il va de soi que lorsqu'on commande la rotation du fût 32'a, il est nécessaire de commander également les rotations correspondantes des bras 36 et 38. Cette fonction est remplie par la commande générale du dispositif. On ne sortirait pas de l'invention si le fût vertical 32'a était mobile en rotation par rapport au socle 32c solidaire du petit bouchon tournant 18, le bras 32'b étant alors solidaire du fût 32'a. Bien entendu, dans ce cas, l'organe moteur 120 est solidaire du petit bouchon tournant et transmet son mouvement au pied du fût 32'a.

Il faut ajouter que, compte tenu du poids de l'ensemble des deux bras de guidage 36 et 38 et des câbles et tubes 50 qui sont fixés sur eux, il peut être préférable de supporter les bras 36 et 38. Dans ce but, on peut prévoir un câble qui est fixé à son extrémité inférieure sur l'axe 40 du bras 38 et qui est solidaire à son extrémité supérieure d'un coulisseau se déplaçant dans un rail de guidage circulaire solidaire du dôme 24.

A titre d'exemple, on peut indiquer que grâce aux deux bras de supportage 36 et 38, les rotations maximales du grand bouchon tournant sont suivies avec des angles maximum de pivotement au niveau des articulations 40 et 42 égaux respectivement à 45° et 62°. On voit que la valeur réduite de ces angles simplifie considérablement le problème des boucles de souplesse ou « mou » que les câbles et tubes doivent présenter au niveau de ces articulations.

On comprend que le dispositif objet de l'invention permet de dégager au maximum l'espace s'étendant au-dessus du petit et du grand bouchons tournants afin de faciliter l'implantation des différents mécanismes sur les bouchons. De plus, les moyens de guidage permettent de limiter les courbures ou torsions appliquées aux câbles ou tubes lors des mouvements, ce qui diminue de façon importante les contraintes qui leur sont appliquées et augmente ainsi leur durée de vie. Il permet d'autre part, l'accessibilité des câbles, ce qui les rend commodément interchangeables.

Dans la description précédente, le plateau inférieur 52a est solidaire de la potence 32 afin de dégager au maximum le petit bouchon tournant. On pourrait cependant, dans certains cas ou pour d'autres applications du dispositif, supprimer la potence. Le plateau inférieur 52a serait alors directement fixé sur le petit bouchon 18 en son centre de rotation. On simplifie alors le système. Il s'agit de la première variante de réalisation.

Selon la deuxième variante de réalisation de l'invention que l'on va décrire ci-après, on supprime effectivement la potence et l'on remplace le toron décrit précédemment par un « toron » à axe rigide qui relie directement le centre de rotation du petit bouchon tournant à l'extrémité libre du bras articulé horizontal. Par ailleurs, le problème général à résoudre est toujours le même puisqu'il s'agit d'éviter le vrillage des câbles ou conduites.

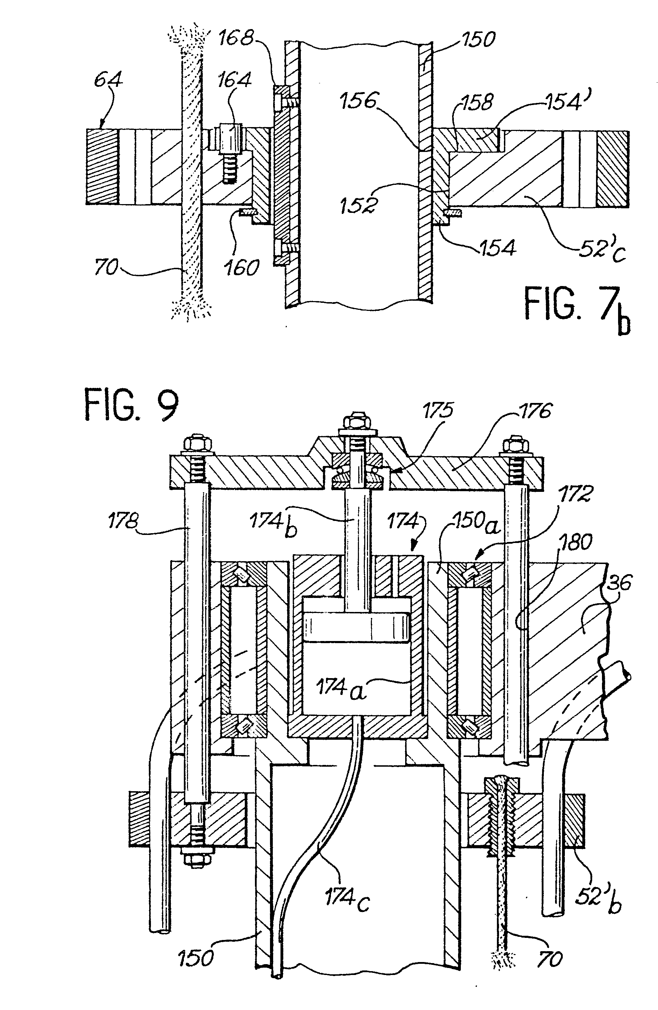

Sur les figures 7a et 7b, on voit le mât vertical rigide 150 dans sa partie médiane et sur la figure 9 on voit l'extrémité supérieure. On rappelle que l'extrémité inférieure du mât est fixée de façon rigide sur le petit bouchon tournant 18 en son centre, l'axe du mât coïncidant avec l'axe de rotation du bouchon.

Les figures 7a et 7b représentent un mode de réalisation des plateaux intermédiaires 52'c. La périphérie externe du plateau 52'c est identique à celle des plateaux intermédiaires 52c. Il n'y a donc pas lieu de la redécrire. De même, l'horizontalité des plateaux est réalisée comme précédemment à l'aide des câbles 70. La différence réside dans la coopération entre le plateau intermédiaire et le mât 150, cette coopération permettant de répartir également la rotation totale entre les plateaux intermédiaires.

Le plateau 52'c est percé d'un alésage central 152. A l'intérieur de cet alésage 152 et autour du mât 150, on trouve une bague 154 comportant un alésage central 156. La bague 154 est solidaire en translation du plateau 52'c d'une part par sa partie plate 154 qui pénètre dans l'évidement 158 du plateau 52'c et d'autre part, par des clips 160. Cependant, la bague 154 peut tourner par rapport au plateau. Sur sa périphérie externe, la partie plate 154' de la bague comporte au moins une encoche 162 correspondant à un angle au centre $\alpha$. Cette encoche 162 coopère avec un tenon 164 solidaire du plateau. Bien entendu, on pourrait prévoir plusieurs encoches 162 et plusieurs tenons 164.

La face interne de la bague 154 correspondant à l'alésage 156 est également munie d'une encoche 166 correspondant à un angle au centre égal à $\beta$. Cette deuxième encoche 166 coopère avec une clavette 168 fixée sur le mât par tout moyen connu. Bien entendu, on peut prévoir plusieurs encoches 166 et plusieurs clavettes 168 pour absorber les efforts mis en jeu. On voit donc qu'on a deux ensembles de limitation de l'angle de rotation du plateau 52c par rapport au mât 150, dont les effets s'ajoutent. Le débattement total possible vaut $\alpha + \beta$.

Sur la figure 8, on a représenté un mode simplifié de réalisation du plateau 52''c. On retrouve simplement une clavette 168' solidaire du mât 150 et une encoche 170 ménagée dans la face interne du plateau 52''c. On obtient ainsi une seule possibilité de rotation égale à $\beta$.

Sur la figure 9, on a représenté le plateau supérieur 52'b. Comme on l'a déjà exposé en liaison avec la figure 5, le plateau 52'b doit pouvoir se déplacer selon la direction verticale sous l'effet d'un vérin et il est solidaire en rotation de l'extrémité du bras horizontal 36.

L'extrémité supérieure 150a du mât 150 est montée tournante dans l'extrémité du bras 36 par l'intermédiaire, par exemple, de deux roulements à butées à billes ou à galets. L'extrémité 150a comporte intérieurement le corps 174a d'un vérin pneumatique 174 dont la tige 174b est solidaire d'un plateau horizontal 176 par l'intermédiaire de la butée à bille 175. On a représenté de plus la conduite d'alimentation 174c du vérin 174. Le plateau 176 est relié au plateau supérieur 52'c par des colonnes telles que 178. Ces colonnes 178 traversent le bras 36 par des alésages 180. On voit donc que le plateau supérieur 52'b est solidaire en rotation du bras 36, mais que le plateau supérieur 52b peut se déplacer verticalement le long du mât 150 sous l'effet du vérin 174.

Sous l'effet de la rotation du mât 150, les conduites 50 se mettent en hélice et le vérin descend. La force de tension ne changera pas, le circuit pneumatique comportant soit un grand volume de gaz, soit un système de détendeur-déverseur.

Comme on l'a déjà indiqué, les plateaux intermédiaires 52'c ou 52''c servent à répartir également l'angle total de rotation entre le plateau inférieur solidaire du bouchon et le plateau supérieur 52'b solidaire en rotation du bras.

Le plateau intermédiaire 52''c de la figure 8 permet une rotation maximale $\beta = 100°$ si l'on veut prévoir trois clavettes 168' et trois encoches 170. Avec les plateaux du type 52'c, on peut donc avoir toutes les valeurs de débattement jusqu'à ± 50°.

Le système constitué par l'encoche 162 et le tenon 164 de la figure 7a permet une rotation maximale $\alpha = 340°$. En effet, il faut tenir compte du diamètre du tenon 164 et de la longueur du talon que l'on doit laisser en relief sur la périphérie de la bague.

Si le plateau doit avoir un débattement compris entre ± 50° et ± 170°, on voit qu'il n'est pas nécessaire d'utiliser l'angle $\beta$. L'encoche 166 aura donc une largeur égale à la largeur de la clavette 168. L'angle $\alpha$ est nul.

Si le plateau doit avoir un débattement compris entre ± 170° et ± 220°, on utilise le plateau 52'c en utilisant les deux systèmes de limitation de rotation.

Si par exemple, on utilise cinq plateaux intermédiaires et que l'angle de débattement total vaut ± 150°, on pourra utiliser successivement les plateaux intermédiaires suivants :

Pour les deux plateaux intermédiaires les plus proches de plateau inférieur, on utilisera des plateaux du type 52''c avec des valeurs respectives pour $\beta = 0$ ; les valeurs respectives pour $\alpha$ seront de ± 75°, ± 100° et ± 125°.

On a alors une exacte répartition de l'hélice des conduites 50 du toron sur toute la hauteur du mât 150 ; notamment pour les conditions les plus sévères qui correspondent au maximum des débattements angulaires prévus et qui ne peuvent être dépassés.

La contraction d'un toron réclame des conduites adaptées et, comme dans tout système travaillant à la torsion, la disposition des conduites 50 sera faite judicieusement pour que le centre de torsion du toron corresponde au mieux avec l'axe principal des plateaux et du mât.

Il faut cependant ajouter que l'on pourrait remplacer les bras horizontaux 36 et 38 par d'autres moyens de supportage des câbles et conduites entre le point fixe et l'extrémité supérieure du toron principal 34. On pourrait utiliser des liaisons souples classiques tels que festins ou guirlandes appliquées de manière connue pour les déplacements linéaires des ponts roulants, que ceux-ci soient combinés avec des bras linéaires coulissants ou non.

De plus, le dispositif objet de l'invention et en particulier la structure de son toron principal, peut s'appliquer à d'autres domaines que des réacteurs nucléaires à bouchons tournants excentrés. On peut citer par exemple la piscine de stockage des assemblages combustibles associée à des réacteurs rapides. on peut citer également l'alimentation par des conduites formant toron de barillets de stockage d'assemblages combustibles. D'une manière générale, l'invention s'applique à chaque fois qu'il faut faire traverser une pièce en rotation par un faisceau de câbles ou conduites présentant une certaine raideur.

**Revendications**

1. Dispositif de guidage de conduites (50) devant traverser une pièce (18) mobile en rotation autour d'un axe vertical, ledit dispositif (30) se caractérisant en ce qu'il comprend des moyens de supportage (36, 38) pour supporter lesdites conduites entre un point fixe (42) extérieur à ladite pièce et un deuxième point situé sur la verticale passant par l'axe de rotation (XX') de ladite pièce mobile constituant l'extrémité des moyens de supportage, des moyens de guidage (52) des portions (34) de conduites disposées entre l'extrémité desdits moyens de supportage et le centre de rotation de ladite pièce mobile, lesdits moyens de guidage étant aptes à maintenir régulièrement espacées lesdites portions de conduites sur une surface de révolution autour de l'axe de ladite pièce mobile, lesdites portions de conduites dormant ainsi un toron (34), et des moyens (32) pour rendre solidaire l'extrémité inférieure desdits moyens de guidage de ladite pièce mobile en son centre de rotation.

2. Dispositif selon la revendication 1, caractérisé en ce que ladite pièce mobile est le petit bouchon tournant (18) d'un réacteur nucléaire du type qui est fermé à sa partie supérieure par une dalle horizontale (4) munie d'un grand bouchon tournant (20) mobile autour de son axe vertical (YY') et d'un petit bouchon tournant ménagé dans ledit grand bouchon tournant et excentré par rapport audit grand bouchon tournant.

3. Dispositif selon la revendication 2, caractérisé en ce que lesdits moyens pour supporter lesdites conduites consistent en deux bras articulés dont l'un (36) est solidaire de l'extrémité supérieure desdits moyens de guidage et dont l'autre (38) est solidaire d'une partie fixe (24) dudit réacteur.

4. Dispositif selon l'une quelconque des revendications 2 et 3, caractérisé en ce qu'il comprend une potence (32) solidaire dudit petit bouchon comportant un fût vertical (32a) et un bras horizontal (32b), l'extrémité libre dudit bras de potence étant située sur l'axe (XX') dudit petit bouchon tournant, un premier bras de guidage horizontal (38) articulé à l'une de ses extrémités par rapport à un point fixe (42) du réacteur, un deuxième bras de guidage horizontal (36) dont une extrémité est articulée à l'extrémité libre dudit premier bras de guidage, des moyens (102, 104) pour commander le pivotement du premier bras par rapport au point fixe et le pivotement des deux bras par rapport au point fixe et le pivotement des deux bras de guidage entre eux de telle façon que l'extrémité libre dudit deuxième bras de guidage soit assujettie à rester sur l'axe (XX') dudit petit bouchon tournant, lesdites conduites (50) étant fixées le long desdits deux bras de guidage (36, 38) et le long du bras horizontal (32b) de la potence, et des moyens de guidage (52) des portions desdites conduites disposées entre ledit bras de potence et ledit deuxième bras de guidage aptes à maintenir régulièrement espacées lesdites portions de conduites sur une surface de révolution autour de l'axe dudit petit bouchon tournant, lesdites portions de conduites formant ainsi un toron (34).

5. Dispositif selon la revendication 4, caractérisé en ce que lesdits moyens de guidage (52) consistent en une pluralité de plateaux circulaires dont un plateau inférieur (52a) solidaire de l'extrémité du bras de potence (32b), un plateau supérieur (52b) solidaire en rotation de l'extrémité libre du deuxième bras de guidage (36), mais libre en translation verticale par rapport à celui-ci, et au moins un plateau intermédiaire (52c), lesdites portions de conduites étant fixées à intervalles réguliers sur la périphérie desdits plateaux et des moyens (70 à 76) pour maintenir lesdits plateaux horizontaux et centrés sur l'axe dudit petit bouchon tournant et pour répartir régulièrement entre les plateaux l'angle de rotation du plateau supérieur par rapport au plateau inférieur lors du pivotement des bras de guidage et des bouchons tournants en fonction des distances verticales séparant lesdits plateaux, un mou étant laissé aux conduites entre le plateau supérieur (52b) et le deuxième bras de guidage (36).

6. Dispositif selon la revendication 5, caractérisé en ce que ledit plateau supérieur (52b) est rendu solidaire de l'extrémité du deuxième bras de guidage (36) par un organe à longueur variable (80) exerçant une force constante dirigée selon l'axe (XX') dudit petit bouchon tournant, et assurant une solidarisation en rotation.

7. Dispositif selon la revendication 6, caractérisé en ce que ledit organe est un vérin (80) dont la tige (80c) disposée selon l'axe dudit petit bouchon tournant est solidaire dudit plateau supérieur (52b) et dont le corps (80a) est solidaire de l'extrémité dudit deuxième bras de guidage (36).

8. Dispositif selon l'une quelconque des revendications 5 à 7, caractérisé en ce que lesdits plateaux (52) sont reliés entre eux par une pluralité de câbles (70) de même longueur, chaque câble étant fixé à son extrémité supérieure sur le plateau supérieur (52b) et à son extrémité inférieure sur ledit plateau inférieur (52a), lesdits câbles traversant le ou lesdits plateaux intermédiaires (52c) et étant fixés sur ceux-ci.

9. Dispositif selon l'une quelconque des revendications 4 à 6, caractérisé en ce que ladite potence (32'b) est elle-même mobile en rotation autour de l'axe vertical (ZZ') de son fût, sous l'effet d'un organe moteur (120).

10. Dispositif selon la revendication 9, caractérisé en ce que ledit fût (32'a) est fixe et en ce que ledit bras de potence (32'b) est monté pivotant à l'extrémité supérieure dudit fût, les portions de conduites s'étendant le long dudit fût étant fixées à la périphérie de deuxièmes plateaux circulaires (52'a, 53'b, 52'c) semblables aux premiers plateaux, ledit deuxième plateau supérieur (52'b) étant rendu solidaire dudit bras (32'b) par des organes élastiques (125) produisant une force selon la direction verticale, du mou étant laissé aux conduites entre ledit deuxième plateau supérieur et ledit bras de potence.

11. Dispositif selon l'une quelconque des revendications 2 et 3, caractérisé en ce que lesdits moyens de guidage consistent en une pluralité de plateaux circulaires dont un plateau inférieur (52a) directement solidaire du petit bouchon tournant (18), un plateau supérieur (52b) solidaire en rotation de l'extrémité libre du deuxième bras de guidage (36), mais libre en translation verticale par rapport à celui-ci, et au moins un plateau intermédiaire (52c), lesdites portions de conduites étant fixées à intervalles réguliers sur la périphérie desdits plateaux et des moyens (70 à 76) pour maintenir lesdits plateaux horizontaux et centrés sur l'axe dudit petit bouchon tournant et pour répartir régulièrement entre les plateaux l'angle de rotation du plateau supérieur par rapport au plateau inférieur lors du pivotement des bras de guidage et des bouchons tournants en fonction des distances verticales séparant lesdits plateaux, un mou étant laissé aux conduites entre le plateau supérieur (52b) et le deuxième bras de guidage (36).

12. Dispositif selon la revendication 11, caractérisé en ce que ledit plateau supérieur (52b) est rendu solidaire de l'extrémité du deuxième bras de guidage (36) par un organe à longueur variable (80) exerçant une force constante dirigée selon l'axe (XX') dudit petit bouchon tournant, et assurant une solidarisation en rotation.

13. Dispositif selon l'une quelconque des revendications 11 et 12, caractérisé en ce que lesdits plateaux (52) sont reliés entre eux par une pluralité de câbles (70) de même longueur, chaque câble étant fixé à son extrémité supérieure sur le plateau supérieur (52b) et à son extrémité inférieure sur ledit plateau inférieur (52a), lesdits câbles traversant le ou lesdits plateaux intermédiaires (52c) et étant fixés sur ceux-ci.

14. Dispositif selon l'une quelconque des revendications 2 et 3, caractérisé en ce que lesdits moyens de guidage consistent en un mât vertical (150) de guidage solidaire à son extrémité inférieure du centre du petit bouchon tournant (18) et à son extrémité supérieure de l'extrémité libre des moyens de supportage (36, 38) ; un plateau supérieur horizontal (52'b) solidaire en rotation de l'extrémité libre desdits moyens de supportage, mais libre en translation verticale en entourant ledit mât ; un plateau inférieur horizontal (52'a) entourant ledit mât et solidaire de l'extrémité inférieure dudit mât ; et au moins un plateau intermédiaire (52'c) entourant ledit mât, libre en translation selon la direction dudit mât et partiellement libre en rotation autour dudit mât, chaque plateau comportant sur sa périphérie des moyens régulièrement répartis pour fixer des câbles (70) maintenant lesdits plateaux horizontaux, le ou chaque plateau intermédiaire (52'c, 52''c) comportant des moyens pour (154, 162, 164, 166, 168, 168', 170) pour limiter sa rotation autour du mât de telle façon que l'angle de rotation entre le plateau supérieur et le plateau inférieur soit régulièrement réparti entre le ou les plateaux intermédiaires.

15. Dispositif selon la revendication 14, caractérisé en ce que les moyens pour limiter ledit angle de rotation consistent en au moins une clavette (168') solidaire du mât (150) coopérant avec au moins une fente (170) de longueur voulue ménagée dans la périphérie de l'orifice central du plateau intermédiaire (52''c).

16. Dispositif selon la revendication 14, caractérisé en ce que les moyens pour limiter ledit angle de rotation consistent en une rondelle (154) solidaire en translation dudit plateau (52'c) et dont la périphérie externe comporte d'une part au moins une encoche (162) de longueur donnée apte à coopérer avec au moins un tenon (164) solidaire dudit plateau intermédiaire et d'autre part, sur sa périphérie interne, au moins une encoche (166) de longueur donnée apte à coopérer avec une clavette (168) solidaire dudit mât (150).

**Claims**

1. Guidance apparatus for conduits (50) traversing a member (18) which is movable by rotation round a vertical axis, said apparatus being characterized in that it comprises support means (36, 38) to support said conduits between a fixed point (42) external of said member, and a second point situated on the vertical passing through the axis of rotation (X-X') of said movable member constituting the end of said support means, guide means (52) of the conduit portions (34) disposed between the end of said support means and the centre of rotation of said movable member, said guide means being adapted to keep said conduit portions regularly spaced on the surface of revolution around the axis of said movable member, said conduit portions thus forming a toroidal assembly, and means (32) to fix the lower end of said guide means with respect to the centre of rotation of said movable member.

2. Apparatus according to Claim 1 characterized in that said movable member is the rotatable small cap (18) of a nuclear reactor of the type whose upper part is covered by a horizontal slab (4) having a large cap (20) rotatable about its vertical axis (Y-Y') and a small rotatable cap formed in the said large rotatable cap, and eccentric with respect to the large rotatable cap.

3. Apparatus according to Claim 2 characterized in that the said support means for said conduits comprises two articulated arms, of which one (36) is fixed to the upper end of said guide means, and the other (38) is fixed to a stationary part (24) of the said reactor.

4. Apparatus according to either of Claims 2 and 3 characterized in that it comprises a bracket (32) fixed to the said small cap and having a vertical shaft (32a) and a horizontal arm (32b), the free end of said bracket arm being located on the axis (X-X') of said small rotatable cap ; a first horizontal guide arm (38) articulated at one end about a stationary part (42) of the reactor ; a second horizontal guide arm (36) one end of which is articulated to the free end of said first guide arm ; means (102, 104) for pivoting said first arm about said stationary part and mutually pivoting the two guide arms so that the free end of said second guide arm remains on the axis (X-X') of said small rotatable cap, said conduits (50) being fixed along the length of said two guide arms (36, 38) and along the length of the horizontal arm (32b) of the bracket ; and guide means (52) for the portions of said conduits located between the said bracket arm and the said second guide arm adapted to maintain regular spacing of the said conduit portions on a surface of revolution around the axis of said small rotatable cap, said conduit portions thereby forming a toroidal assembly.

5. Apparatus according to Claim 4 characterized in that said guide means (52) comprise a plurality of circular plates having a lower plate (52a) fixed to the end of the bracket arm (32b), an upper plate (52b) incapable of rotation with respect to the free end of the second guide arm (36) but free to move vertically with respect to said arm, and at least one intermediate plate (52c), said conduit portions being fixed at regular intervals around the periphery of said plates and means (70 to 76) to keep the plates horizontal and centred on the axis of the said small rotatable cap and to distribute regularly between the plates, during pivoting of the guide arms and rotatable caps, the angle of rotation of the upper plate with respect to the lower plate as a function of the vertical distance between said plates, the conduits having some slack between the upper plate (52b) and the second guide arm (36).

6. Apparatus according to Claim 5 characterized in that the upper plate (52b) is linked to the end of second guide arm (36) by a variable-length mechanism (80) exercising a contant force along the axis (X-X') of the said small rotatable cap, and fixed in respect of rotation.

7. Apparatus according to Claim 6 characterized in that the said mechanism is a piston-cylinder assembly (80) whose rod (80c), directed along the axis of said small rotatable cap, is fixed with respect to the said upper plate (52b), and whose body (80a) is fixed at the end of said second guide arm (36).

8. Apparatus according to any one of Claims 5 to 7 characterized in that the said plates (52) are interconnected by a plurality of cables (70), each having the same length, each cable being fixed at its upper end to the upper plate (52b) and at its lower end to said lower plate (52a), said cables passing over and being fixed to said intermediate plate or plates (52c).

9. Apparatus according to any one of Claims 4 to 6, characterized in that said bracket (32'b) is itself rotatable around the vertical axis (Z-Z') of its shaft (32'a) by means of a rotation mechanism (120).

10. Apparatus according to Claim 9 characterized in that said shaft (32'a) is fixed and in that said bracket arm (32'b) is pivotally mounted at the upper end of said shaft, the conduit portions extending lengthways of said shaft being fixed at the periphery of second circular plates, (52'a, 52'b, 52'c) similar to the first plates, said upper second plate (52'b) being fixed to said arm (32'b) by elastic means (125) producing a vertically-directed force, some slack being left to the conduits between said second upper plate and said bracket arm.

11. Apparatus according to either of Claims 2 and 3 characterized in that said guide means comprise a plurality of circular plates having a lower plate (52a) directly fixed to the small rotatable cap (18), an upper plate (52b) unable to rotate with respect to the free end of the second guide arm (36), but free to move vertically with respect thereto, and at least one intermediate plate (52c), said conduit portions being fixed at regular intervals at the periphery of said plates and means (70 to 76) to maintain said plates horizontal and centred on the axis of said small rotatable cap and to distribute regularly between the plates, during pivoting of the guide arms and rotatable caps, the angle of rotation of the upper plate with respect to the lower plate as a function of the vertical distance between said plates, the conduits having some slack between the upper plate (52b) and the second guide arm (36).

12. Apparatus according to Claim 11 characterized in that said upper plate (52b) is fixed to the end of second guide arm (36) by a variable length mechanism (80) exercising a constant force along the axis (X-X') of said small rotatable cap and ensuring it is fixed with respect to rotation.

13. Apparatus according to either of Claims 11 and 12 characterized in that said plates (52) are interconnected by a plurality of cables (70), each having the same length, each cable being fixed at its upper end to the upper plate (52b) and at its lower end to the lower plate (52a), said cables passing over and being fixed to said intermediate plate or plates (52c).

14. Apparatus according to either of Claims 2 and 3 characterized in that said guide means comprise a vertical guide mast (150) whose lower end is fixed to the centre of the small rotatable cap (18) and whose upper end is fixed to the free end of the support means (36, 38); an upper horizontal plate (52'b) unable to rotate with respect to the free end of said support means, but free to move vertically and surrounding said mast; a lower horizontal plate (52'a) surrounding said mast and fixed to the lower end of said mast; and at least one intermediate plate (52'c) surrounding said mast, free to move lengthways of said mast and partially free to rotate with respect to said mast, each plate having at its periphery regularly spaced means to fix cables (70) maintaining said plates in a horizontal attitude, the or each intermediate plate (52'c, 52"c) having means (154, 162, 164, 166, 168, 168', 170) to limit its rotation around the mast in such a manner that the angle of rotation between the upper and lower plates is regularly distributed between the intermediate plate or plates.

15. Apparatus according to Claim 14 characterized in that the means to limit said angle of rotation comprise at least one spline (168') fixed to mast (150) cooperating with at least one slot (170) of preselected length formed in the periphery of the central orifice of the intermediate plate (52"c).

16. Apparatus according to Claim 14 characterized in that the means to limit said angle of rotation comprise a washer (154) movable with said plate (52'c) whose external periphery comprises at least one recess (162) of preselected length adapted to cooperate with at least one tenon (164) fixed to said intermediate plate and, on the other hand has, on its internal periphery, at least one recess (166) of preselected length adapted to cooperate with a spline (168) fixed to said mast (150).

**Ansprüche**

1. Einrichtung zur Führung von Leitungen (50) vor dem Durchqueren eines um eine vertikale Achse drehbeweglichen Teiles (18), wobei die Einrichtung (30) dadurch gekennzeichnet ist, daß sie Tragemittel (36, 38) zum Tragen der Leitungen zwischen einem festen Punkt (42) außerhalb des Teiles und einem zweiten Punkt aufweist, der auf jener Vertikalen liegt, die durch die Drehachse (X X') des genannten beweglichen Teiles hindurchläuft, und das Ende der Tragemittel bildet, Führungsmittel (52) für jene Abschnitte (34) der Leitungen, welche zwischen dem Ende der genannten Tragemittel und der Drehmitte des genannten beweglichen Teiles angeordnet sind, wobei die genannten Führungsmittel dazu eingerichtet sind, einen gleichmäßigen Abstand der genannten Leitungsabschnitte auf einer Umlauffläche um die Achse des beweglichen Teiles aufrechtzuerhalten, und somit die Leitungsabschnitte eine Litze (34) bilden, und Mittel (32) zum festen Verbinden des unteren Endes der genannten Führungsmittel mit dem beweglichen Teil in seiner Drehmitte.

2. Einrichtung nach Anspruch 1, dadurch gekennzeichnet, daß das bewegliche Teil der kleine, rotierende Deckel (18) eines Kernreaktors jenes Typs ist, der an seinem oberen Teil durch durch eine horizontale Platte (4) verschlossen ist, die mit einem großen, rotierenden Deckel (20) versehen ist, der um seine vertikale Achse (Y, Y') beweglich ist, sowie mit einem kleinen rotierenden Deckel, der in den großen rotierenden Deckel eingebracht ist und bezüglich dem großen rotierenden Deckel außermittig angeordnet ist.

3. Einrichtung nach Anspruch 2, dadurch gekennzeichnet, daß die genannten Mittel zum Tragen der Leitungen aus zwei gelenkig angeordneten Armen bestehen, von welchen der eine (36) fest mit dem oberen Ende der genannten Führungsmittel und der andere (38) fest mit einem festen Teil (24) des Reaktors verbunden ist.

4. Einrichtung nach einem der Ansprüche 2 und 3, dadurch gekennzeichnet, daß sie einen Ausleger (32) aufweist, der fest mit dem kleinen Deckel verbunden ist, und einen vertikalen Schaft (32a) sowie einen horizontalen Arm (32b) aufweist, wobei das freie Ende des genannten Armes des Auslegers auf der Achse (X, X') des kleinen rotierenden Deckels angeordnet ist, einen ersten, horizontalen Führungsarm (38), der mit dem einen seiner Enden gelenkig bezüglich einem festen Punkt (42) des Reaktors angeordnet ist, einen zweiten horizontalen Führungsarm (36), dessen eines Ende gelenkig mit dem freien Ende des genannten ersten Führungsarmes verbunden ist, Mittel (102, 104) zum Steuern der Schwenkbewegung des ersten Armes bezüglich dem festen Punkt sowie der Schwenkbewegung des zweiten Führungsarmes gegenseitig derart, daß das freie Ende des genannten zweiten Führungsarmes zur Ruhelage über der Achse (X, X') des kleinen rotierenden Deckels festgelegt ist, wobei die Leitungen (50) längs der genannten beiden Führungsarme (36, 38) sowie längs des horizontalen Armes (32b) des Auslegers befestigt sind, und Führungsmittel (52) für jene Abschnitte der genannten Leitungen, die zwischen dem Arm des Auslegers und dem zweiten Führungsarm angeordnet sind, wobei die Führungsmittel dazu eingerichtet sind, jene Abschnitte der Leitungen mit gleichem Abstand auf einer Umlauffläche um die Achse des genannten kleinen rotierenden Deckels zu halten, und wobei die Leitungsabschnitte somit eine Litze (34) bilden.

5. Einruchtung nach Anspruch 4, dadurch gekennzeichnet, daß die genannten Führungsmittel (52) aus mehreren kreisförmigen Scheiben bestehen, von welchen eine untere Scheibe (52a) fest mit dem Ende des Auslegerarmes (32b) verbunden ist, eine obere Scheibe (52b) drehfest mit dem freien Ende des zweiten Führungsarmes (36) verbunden ist, aber zur vertikalen Translationsbewegung bezüglich diesem frei ist, und mindestens eine mittlere Scheibe (52c) vorgesehen ist, wobei die genannten Leitungsabschnitte mit gleichmäßigen Abständen auf dem Umfang der genannten Scheiben und der Mittel (70 bis 76) befestigt sind, um die gennannten Scheiben horizontal und auf die Achse des rotierenden kleinen Deckels zentriert zu halten, und um gleichmäßig den Drehwinkel der oberen Scheibe bezüglich der unteren Scheibe während der Schwenkbewegung des Führungsarmes und der rotierenden Deckel gleichmäßig unter den Scheiben aufzuteilen, und zwar als Funktion der vertikalen Abstände, welche die genannten Scheiben trennen, wobei eine Schlaffstelle bei den Leitungen zwischen der oberen Scheibe (52b) und dem zweiten Führungsarm (36) verbleibt.

6. Einrichtung nach Anspruch 5, dadurch gekennzeichnet, daß die obere Scheibe (52b) fest mit dem Ende des zweiten Führungsarmes (36) mittels eines Teiles mit veränderlicher Länge (80) verbunden ist, welches eine ständige Kraft ausübt, die längs der Achse (X, X') des kleinen rotierenden Deckels ausgerichtet ist und eine drehfeste Verbindung sicherstellt.

7. Einrichtung nach Anspruch 6, dadurch gekennzeichnet, daß das Teil eine Hub- bzw. Stelleinrichtung (80), ist, deren Spindel (80c) längs der Achse des kleinen rotierenden Deckels angeordnet und fest mit der oberen Scheibe (52b) verbunden ist, und deren Außenteil (80a) fest mit dem Ende des zweiten Führungsarmes (36) verbunden ist.

8. Einrichtung nach einem der Ansprüche 5 bis 7, dadurch gekennzeichnet, daß die Scheiben (52) zwischeneinander durch mehrere Kabel (70) mit gleicher Länge verbunden sind, wobei jedes Kabel mit seinem oberen Ende auf der oberen Scheibe (52b) und mit seinem unteren Ende auf der unteren Scheibe (52a) befestigt ist und wobei die Kabel die mittlere oder mittleren Scheibe oder Scheiben (52c) durchdringen und auf dieser bzw. diesen befestigt sind.

9. Einrichtung nach einem der Ansprüche 4 bis 6, dadurch gekennzeichnet, daß der Ausleger (32'b) seinerseits um die vertikale Achse (Z, Z') seines Schaftes (32'a) unter der Wirkung eines Antriebsorganes (120) drehbeweglich ist.

10. Einrichtung nach Anspruch 9, dadurch gekennzeichnet, daß der Schaft (32'a) festliegt und daß der Auslegerarm (32'b) am oberen Ende des Schaftes schwenkbar angebracht ist, wobei jene Leitungsabschnitte, welche sich längs des Schaftes erstrecken, am Umfang zweiter kreisförmiger Scheiben (52'a, 52'b, 52'c) befestigt sind, welche den ersten Scheiben gleichen, wobei die oberste zweite Scheibe (52'b) fest mit dem Arm (32'b) mittels elastischer Organe (125) verbunden ist, wleche eine Kraft in vertikaler Richtung erzeugen, und wobei eine Schlaffstelle für die Leitungen zwischen der zweiten oberen Scheibe und dem Auslegerarm verbleibt.

11. Einrichtung nach einem der Ansprüche 2 und 3, dadurch gekennzeichnet, daß die Führungsmittel aus mehreren kreisförmigen Scheiben bestehen, von welchen eine untere Scheibe (52a) unmittelbar fest mit dem kleinen, rotierenden Deckel (18) verbunden ist, eine obere Scheibe (52b) drehfest mit dem freien Ende des zweiten Führungsarmes (36), aber frei zur vertikalen Translationsbewegung bezüglich diesem angebracht ist, und mindestens eine mittlere Scheibe (52c) vorliegt, wobei die genannten Leitungsabschnitte mit regelmäßigen Abständen am Umfang der Scheibe befestigt sind und Mittel (70 bis 76) um die Scheiben horizontal und auf die Achse des kleinen, rotierenden Deckels ausgerichtet zu halten, und um zwischen den Scheiben den Drehwinkel der oberen Scheibe bezüglich der unteren Scheibe während der Schwenkbewegung des Führungsarmes und der rotierenden Deckel als Funktion der vertikalen Abstände aufzuteilen, welche die Scheiben voneinander trennen, wobei eine Schlaffstelle für die Leitungen zwischen der oberen Scheibe (52b) und dem zweiten Führungsarm (36) verbleibt.

12. Einrichtung nach Anspruch 11, dadurch gekennzeichnet, daß die obere Scheibe (52b) fest mit dem Ende des zweiten Führungsarmes (36) mittels eines Organs (80) mit veränderlicher Länge verbunden ist, welches eine konstante Kraft ausübt, die längs der Achse (X, X') des kleinen rotierenden Deckels ausgerichtet ist, und eine drehfeste Verbindung sicherstellt.

13. Einrichtung nach jedem der Ansprüche 11 und 12, dadurch gekennzeichnet, daß die Scheiben (52) untereinander mittels einer Vielzahl von kabeln (70) gleicher Länge verbunden sind, wobei jedes Kabel mit seinem oberen Ende auf der oberen Scheibe (52b) und mit seinem unteren Ende auf der unteren Scheibe (52a) befestigt ist und die Kabel die mittlere Scheibe oder mittleren Scheiben (52c) durchqueren und auf diesen befestigt sind.

14. Einrichtung nach einem der Ansprüche 2 und 3, dadurch gekennzeichnet, daß die Führungsmittel aus einem vertikalen Führungsmast (150) bestehen, der an seinem unteren Ende fest mit der Mitte des kleinen rotierenden Deckels (18) verbunden ist, sowie an seinem oberen Ende mit dem freien Ende der Tragemittel (36, 38), einer oberen, horizontalen Scheibe (52'b), welche drehfest mit dem freien Ende der Tragemittel verbunden ist, aber frei zur vertikalen Translationsbewegung während der Drehung des Mastes angeordnet ist, einer unteren horizontalen Scheibe (52'a), welche den Mast umgibt und fest mit dem unteren Ende verbunden ist, und mindestens einer Zwischenscheibe (52'c), welche des Mast umgibt und zur Translationsbewegung in Richtung des Mastes ganz und zur Drehbewegung um den Mast teilweise frei ist, wobei jede Scheibe an ihrem Umfang regelmäßig voneinander getrennte Mittel aufweist, um die Kabel (70) zu befestigen, welche die Scheiben horizontal halten, wobei die Zwischenscheibe oder Zwischenscheiben (52'c, 52"c) Mittel (154, 162, 164, 166, 168, 168', 170) zum Begrenzen ihrer Drehbewegung um den Mast aufweist bzw. aufweisen, und zwar derart, daß der Drehwinkel zwischen der oberen Scheibe und der unteren Scheibe regelmäßig auf die Zwischenscheibe oder Zwischenscheiben aufgeteilt ist.

15. Einrichtung nach Anspruch 14, dadurch gekennzeichnet. daß die Mittel zum Begrenzen des Drehwinkels aus mindestens einem Keil (168') bestehen, der fest mit dem Mast (150) verbunden ist und mit mindestens einem Schlitz (170) bestimmter Länge zusammenwirkt, der in den Umfang der mittigen Öffnung der Zwischenscheibe (52"c) eingebracht ist.

16. Einrichtung nach Anspruch 14, dadurch gekennzeichnet, daß die Mittel zum Begrenzen des Drehwinkels aus einer runden Platte (154) bestehen, die bei Translationsbewegung fest mit der Scheibe (52'c) verbunden ist und deren Außenumfang mindestens eine Einbuchtung (162) bestimmter Länge aufweist, welche dazu eingerichtet ist, mit mindestens einem Zapfen (164) zusammenzuwirken, der fest mit der Zwischenscheibe verbunden ist, und welche andererseits auf ihrem Innenumfang mindestens eine Einbuchtung (166) mit vorgegebener Länge aufweist, welche dazu eingerichtet ist, mit einem Keil (168) zusammenzuwirken, der fest mit dem Mast (150) verbunden ist.

FIG. 1

24

38

40

42

36

52b

34

30

52c

50

H'

52a

20

18

32b

32a

FIG. 2

2

FIG. 3

FIG. 4

74b
74a
76
72
76
66
70
70
60
62
69
68
64
70
52c
50
76

0014606

4

FIG. 5

FIG. 6

FIG. 8

FIG. 7ₐ

7

FIG. 7b

FIG. 9